# FASCICULE DE BREVET EUROPEEN

(11) **EP 2 809 971 B1**
(45) Date de publication et mention de la délivrance du brevet: **06.04.2016**
(21) Numéro de dépôt: 13702052.5
(22) Date de dépôt: 31.01.2013
(51) Int. Cl.: F16J 15/00, F16J 15/16, F16J 15/34, F04D 15/00, F04D 29/10, F04D 7/08, F04D 29/14

(54) **DISPOSITIF D'ETANCHEITE A L'ARRET PASSIF POUR SYSTEME DE JOINTS D'ARBRE D'UN GROUPE MOTOPOMPE PRIMAIRE**
ABDICHTUNGSVORRICHTUNG MIT PASSIVER ABSCHALTUNG FÜR EIN SYSTEM AUS WELLENDICHTUNGEN EINER REAKTORKÜHLUNGSPUMPENEINHEIT
PASSIVE SHUTDOWN SEALING DEVICE FOR A SYSTEM OF SHAFT SEALS OF A REACTOR COOLANT PUMP UNIT

(30) Priorité: 01.02.2012 FR 1250957
(43) Date de publication de la demande: 10.12.2014
(73) Titulaire: AREVA NP, 92400 Courbevoie (FR)
(72) Inventeur: THUILLIER, Romain, F-59300 Valenciennes (FR)
(74) Mandataire: Cabinet Camus Lebkiri
(86) Numéro de dépôt international: PCT/EP2013/051928
(87) Numéro de publication internationale: WO 2013/113827

(56) Documents cités:
- GB-A- 2 417 298
- US-A- 5 562 294
- US-A1- 2003 057 655
- US-A1- 2007 140 877

## Description

### DOMAINE TECHNIQUE

Le domaine de l'invention est celui des groupes motopompes primaires de réacteurs nucléaires à eau sous pression (REP).

L'invention concerne plus un dispositif d'étanchéité à l'arrêt (DEA) passif permettant de contrôler une fuite de fluide de refroidissement primaire résultant de la défaillance du système de joints présent sur le groupe motopompe primaire.

### ETAT DE LA TECHNIQUE

Les dispositifs d'étanchéité à l'arrêt (DEA) ont été développés dans les réacteurs nucléaires à eau sous pression de nouvelles générations pour faire face une défaillance du système de joints du groupe motopompe primaire suite à une situation accidentelle, dite SBO (pour Station Black Out en langue anglaise).

Ainsi, les dispositifs d'étanchéité à l'arrêt doivent, dans cette situation accidentelle et après l'arrêt de la pompe primaire, permettre de contrôler et de stopper une fuite du fluide de refroidissement primaire résultant de la défaillance du système de joints du groupe motopompe primaire.

Classiquement, ce type de dispositif est activé par une source auxiliaire (telle que par exemple un circuit d'azote sous pression) et le déclenchement est piloté par une information délivrée par le contrôle commande du réacteur, en cas de perte des sources de refroidissement du groupe motopompe primaire.

Dans le but de s'affranchir de l'utilisation d'une source d'activation, il a été développé un dispositif d'étanchéité à l'arrêt passif ne nécessitant aucun système auxiliaire d'activation, ni d'élaboration d'une information de déclenchement au niveau du contrôle commande du réacteur. Un tel dispositif d'étanchéité à l'arrêt passif est décrit dans le document WO 2010/068615. Un autre dispositif est connu de US 5, 562, 294.

### EXPOSE DE L'INVENTION

Dans ce contexte l'invention vise à proposer une amélioration d'un tel dispositif d'étanchéité permettant de garantir l'activation du dispositif d'étanchéité ainsi que son bon fonctionnement lors d'une situation acciden-telle.

A cette fin l'invention propose un dispositif d'étanchéité à l'arrêt passif pour système de joints d'arbre de groupe motopompe primaire comportant :
- un anneau d'étanchéité fendu présentant une position inactivée dans laquelle un débit de fuite est autorisé et une position activée dans laquelle ledit anneau stoppe ledit débit de fuite ;
- au moins un piston adapté pour positionner ledit anneau d'étanchéité fendu dans sa position activée ;
- des moyens de verrouillage/déverrouillage adaptés pour verrouiller ledit au moins un piston dans sa position inactivée lorsque la température dudit moyen de verrouillage/déverrouillage est inférieure à un seuil de température, et pour libérer ledit au moins un piston lorsque la température dudit moyen de verrouillage/déverrouillage est supérieure au dit seuil de température ;
- des moyens élastiques adaptés pour déplacer ledit au moins un piston lorsque celui-ci est libéré, de manière à positionner ledit anneau d'étanchéité dans sa position activée.

Grâce à l'invention, il est possible de stopper une fuite du fluide de refroidissement primaire résultant de la défaillance du système de joints du groupe motopompe primaire sans nécessité d'une source auxiliaire d'activation.

La conception du dispositif selon l'invention permet une implantation simplifiée sur les architectures des groupes motopompes primaires déjà en service.

Grâce au dispositif selon l'invention, il est également possible d'ajuster le dispositif aux contraintes de fonctionnement de chaque type de réacteur nucléaire par le réglage de la température d'auto-activation du dispositif, et plus précisément par la modification de la composition de l'élément fusible.

Le dispositif d'étanchéité à l'arrêt passif selon l'invention peut également présenter une ou plusieurs des caractéristiques ci-dessous prises individuellement ou selon toutes les combinaisons techniquement possibles :
- ledit dispositif est adapté pour être intégré sur un système de joints d'un arbre de groupe motopompe primaire en service ;
- ledit anneau comporte une paroi latérale chanfreinée adaptée pour coopérer avec une paroi chanfreinée dudit au moins un piston ;
- lesdits moyens de verrouillage/déverrouillage sont adaptés pour se dégrader mécaniquement à partir d'un seuil de température compris entre 80°C et 200°C, avantageusement égal à 150°C ;
- ledit anneau d'étanchéité est réalisé dans un matériau polymère résistant à des températures supérieures à 300 °C ;
- ledit anneau d'étanchéité est réalisé en PEEK ;
- ledit anneau d'étanchéité est réalisé en un composite à matrice PEEK chargé fibre de verre ou de carbone ;
- ledit anneau d'étanchéité est réalisé dans un matériau métallique ;
- ledit anneau d'étanchéité est un matériau composite formé par un noyau métallique et revêtu par un matériau plus malléable que ledit noyau métallique ;
- ledit matériau plus malléable que ledit noyau métallique est un polymère ou du nickel ou de l'argent ;
- lesdits moyens élastiques sont des ressorts de compression hélicoïdaux ou des ressorts à vagues ou des rondelles élastiques ;
- le dispositif comporte une pluralité de pistons et une pluralité de moyens de verrouillage/déverrouillage répartis sur le pourtour dudit anneau, lesdits pistons et lesdits moyens de verrouillage/déverrouillage étant écartés angulairement les uns des autres d'un angle constant ;
- ledit dispositif comporte trois pistons et trois moyens de verrouillage/déverrouillage ;
- ledit dispositif comporte une bague fendu intégrée dans ledit anneau d'étanchéité et adaptée pour assurer l'étanchéité dudit dispositif en cas de dégradation dudit anneau.
L'invention a également pour objet un groupe motopompe primaire comportant :
- un système de joints adapté pour réaliser une fuite contrôlée s'établissant le long d'un chemin de fuite agencé le long de l'arbre pompe pompe du groupe motopompe primaire ;
- un dispositif d'étanchéité à l'arrêt passif selon l'invention adapté pour obturer au moins partiellement ledit chemin de fuite dudit système de joints lorsque ledit système de joint est défaillant et lorsque ledit anneau d'étanchéité est activé, de manière à réaliser une fuite contrôlée.

### BREVE DESCRIPTION DES FIGURES

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 illustre une vue en coupe partielle d'un système de joints d'un groupe motopompe primaire
- premier mode de réalisation d'un dispositif d'étanchéité d'arrêt passif selon l'invention intégré dans un système de joints d'un groupe motopompe primaire ;
- la figure 2 illustre un dispositif d'arrêt passif selon l'invention dans sa position de repos intégré dans un système de joints d'un groupe motopompe primaire ;
- la figure 3 illustre le dispositif d'arrêt selon l'invention, illustré à la figure 2, dans sa position activée.

Pour plus de clarté, les éléments identiques ou similaires sont repérés par des signes de références identiques sur l'ensemble des figures.

### DESCRIPTION DETAILLEE D'AU MOINS UN MODE DE REALISATION

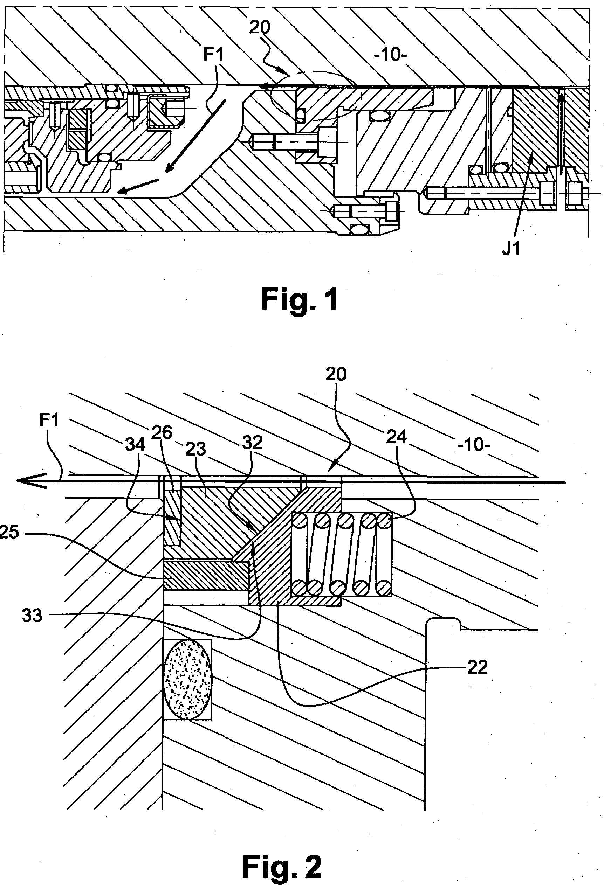

Les pompes primaires des réacteurs à eau sous pression sont de type centrifuge à axe vertical. L'étanchéité dynamique en sortie d'arbre 10 (figure 1) est assurée par un système de joints constitué de trois étages.

Le premier étage est baptisé joint n°1. Le joint n°1, référencé J1, est un joint hydrostatique à fuite contrôlée. En fonctionnement normal, un débit de fuite, illustré par la flèche F1, s'établit le long de l'arbre 10.

En situation accidentelle, la température du fluide en entrée du joint n°1 subit une élévation rapide de température pour atteindre une valeur proche de la température du circuit primaire, soit environ 280°C. A cette température, les performances du joint n°1 sont dégradées ce qui entraine une augmentation très importante de débit de fuite qui peut dépasser 10 m³ par heure. Les dispositifs d'étanchéité à l'arrêt (DEA) passif sont destinés dans cette situation accidentelle à bloquer le chemin de fuite F1 en aval du joint n°1.

La figure 1 représente plus particulièrement le chemin de fuite F1 le long de l'arbre 10 entre le joint n°1 et le joint n°2 (non représenté) situé en amont du joint n°1.

Avantageusement, le dispositif DEA 20 selon l'invention est positionné sur le chemin de fuite F1 de manière à pouvoir bloquer l'écoulement du débit de fuite le long de l'arbre 10 en situation accidentelle.

La figure 2 illustre plus particulièrement le dispositif d'étanchéité 20 lors des conditions normales de fonctionnement du groupe motopompe primaire, c'est-à-dire lorsque la température du débit de fuite est inférieure à une valeur seuil.

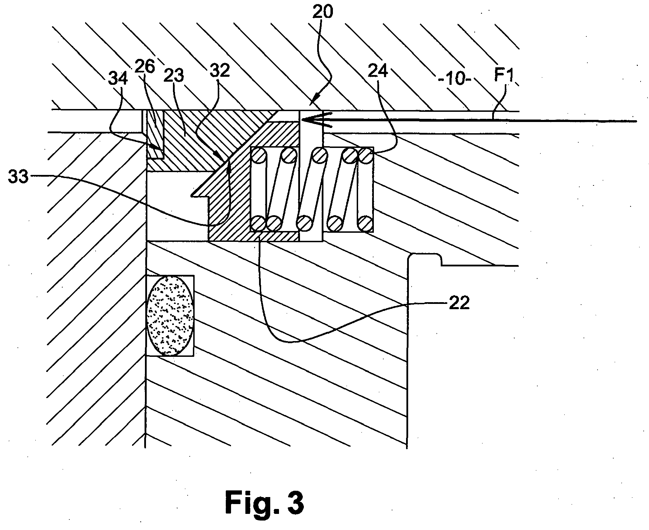

La figure 3 illustre plus particulièrement le dispositif d'étanchéité lors des situations accidentelles de fonctionnement du groupe motopompe primaire, c'est-à-dire lorsque la température du débit de fuite est supérieure à une valeur seuil.

Le dispositif d'étanchéité à l'arrêt 20 selon l'invention comporte :
- un anneau d'étanchéité fendu 23 positionné concentriquement autour de l'arbre pompe 10 du groupe motopompe primaire ;
- des moyens 22, de type piston, adaptés pour contraindre l'anneau d'étanchéité fendu 23 dans une position plus fermée que celle correspondant à sa position de fonctionnement dans laquelle le chemin de fuite n'est pas obstrué ;
- des moyens de verrouillage/déverrouillage 25 formés par un anneau fusible permettant de verrouiller la position des pistons 22 dans une position, dite position de repos, lorsque la température du débit de fuite est inférieure à une valeur seuil prédéterminée, et permettant de déverrouiller la position des pistons 22 de leur position de repos de manière à atteindre une position, dite position activée, lorsque la température du débit de fuite est supérieure ou égale à la valeur seuil prédéterminée ;
- des moyens élastiques 24, tels que par exemple des ressorts de compression, adaptés pour déplacer axialement les différents pistons 22 du dispositif 20 de manière à contraindre axialement l'anneau d'étanchéité fendu 23 autour de l'arbre 10.

Les pistons 22 sont répartis sur la circonférence de l'anneau d'étanchéité 23.

L'anneau d'étanchéité 23 présente une première paroi latérale chanfreinée 33 dont la pente est adaptée pour coopérer avec la paroi chanfreinée 32 en partie basse des pistons 22.

Le contact entre le piston 22 et l'anneau d'étanchéité fendu 23, et plus particulièrement entre la paroi chanfreinée 32 du piston et la paroi chanfreinée 33 de l'anneau d'étanchéité 23, est assuré par une pluralité de moyens élastiques 24, par exemple des ressorts de compression hélicoïdaux, des ressorts à vague, des rondelles élastiques, repartis sur la circonférence de l'anneau d'étanchéité 23 et exerçant un effort sur les pistons 22.

Selon le mode de réalisation illustré aux figures 2 et 3, les pistons 22 comportent des alésages 34 adaptés pour loger en partie, ou totalement, les moyens élastiques 24.

Les moyens de verrouillage/déverrouillage 25 sont formés par un anneau fusible en matériau polymère choisi en fonction de sa température de dégradation et de sa perte de ses caractéristiques mécaniques à partir d'un seuil de température donné.

Selon un mode préférentiel de l'invention, le dispositif comporte trois pistons 22 et trois moyens élastiques 24 répartis à 120° sur la circonférence de l'arbre pompe 10 du groupe motopompe primaire.

En conditions normales de fonctionnement (figure 2), l'anneau d'étanchéité 23 est maintenu en retrait du chemin de fuite F1. L'anneau d'étanchéité 23 est verrouillé dans cette position par retour élastique et en prenant appui sur la paroi chanfreinée 32 des pistons 22, les pistons 22 étant maintenus dans leur position de repos par l'anneau fusible 25.

En conditions accidentelles (figure 3), l'augmentation de la température du débit de fuite a pour effet d'augmenter la température au voisinage du dispositif d'arrêt 20, et notamment la température de l'anneau fusible 25. Lorsque la température du débit de fuite atteint une valeur seuil, prédéfinie en fonction de la nature de l'anneau fusible 25, celui-ci se dégrade n'assurant plus par conséquent une résistance mécanique suffisante pour résister à l'effort généré par la pluralité de moyens élastiques 24. La fusion de l'anneau fusible 25 lors de l'augmentation de la température permet ainsi de déclencher le dispositif 20 par le déverrouillage des pistons 22.

Les pistons 22 n'étant plus maintenus dans leur position de repos, l'effort exercé par les moyens élastiques 24 déplace axialement les pistons jusqu'à leur position activée illustrée à la figure 2.

Le déplacement axial des pistons 22 engendre un effort radial sur l'anneau d'étanchéité 23 via la paroi chanfreinée 32 des pistons coopérant par coulissement avec la paroi chanfreinée 33 de l'anneau d'étanchéité 23.

La contrainte radiale, due au déplacement des pistons 23, va engendrer une réduction du diamètre de l'anneau d'étanchéité fendu 23 de manière à ce que celui-ci vienne se serrer contre l'arbre du rotor 10.

Ainsi dans la position activée des pistons 22, l'anneau d'étanchéité 23 assure le blocage du chemin de fuite F1 grâce à l'effort exercé par les moyens élastiques 24 puis également par l'effet autoclave induit par l'augmentation de la pression en amont du dispositif d'étanchéité 20 en position activée.

Selon un mode de réalisation de l'invention, non limitatif, l'anneau d'étanchéité 23 présente, sur sa deuxième paroi latérale 34, un épaulement adapté pour intégrer une bague fendue 26, dite baque anti-extrusion. La bague fendue 26 est adaptée pour assurer de manière optimum l'étanchéité du dispositif d'arrêt notamment lorsque, durant une situation exceptionnelle, la température est telle que les caractéristiques mécaniques de l'anneau d'étanchéité 23 seraient dégradées.

Le choix du polymère de l'anneau fusible 25 est réalisé de manière à ce qu'il puisse résister à l'effort exercé par les moyens élastiques 24 jusqu'à un seuil de température compris entre 80°C et 200°C et avantageusement égal à 150°C.

L'anneau d'étanchéité 23 du dispositif d'arrêt 20 peut être réalisé dans un matériau polymère résistant à de hautes températures (i.e. supérieures à 300°C), tel que par exemple du PEEK ou un composite PEEK chargé de fibres de verre ou de carbone. L'utilisation d'un tel matériau permet d'obtenir à haute température, un anneau d'étanchéité dans un état caoutchoutique lui permettant de se déformer pour épouser la géométrie de son environnement et ainsi assurer une meilleure qualité d'étanchéité.

L'anneau d'étanchéité fendu 23 du dispositif 20 peut également être réalisé dans un matériau métallique. Dans ce cas, un débit de fuite résiduel sera attendu du fait des jeux existants entre l'anneau d'étanchéité 23 et les pièces en son contact. Toutefois, l'utilisation d'un matériau métallique permet de sécuriser la tenue du dispositif et notamment de l'anneau d'étanchéité en cas d'activation dudit dispositif avant l'arrêt complet de la rotation de l'arbre de la pompe.

L'anneau d'étanchéité fendu 23 peut également être réalisé dans un matériau composite formé par un noyau métallique revêtu d'un matériau plus malléable que le noyau, tel que par exemple un polymère, du nickel ou encore de l'argent. Le matériau périphérique plus malléable que le noyau permettra de combler les jeux existants entre les différentes pièces par déformation de la couche superficielle. En cas d'usure de la couche superficielle provoquée par la rotation de l'arbre, le noyau métallique plus dense permet de garantir une limitation du débit de fuite.

Les pistons 22 ainsi que la bague fendue anti-extrusion 26 sont avantageusement réalisés dans matériaux métalliques de type aciers inoxydables.

## Revendications

1. Dispositif d'étanchéité à l'arrêt passif (20) pour système de joints d'arbre de groupe motopompe primaire comportant :
- un anneau d'étanchéité fendu (23) présentant une position inactivée dans laquelle un débit de fuite est autorisé et une position activée dans laquelle ledit anneau stoppe ledit débit de fuite ;
- au moins un piston (22) adapté pour positionner ledit anneau d'étanchéité fendu (23) dans sa position activée;
**caractérisé en ce qu'**il comporte
- des moyens de verrouillage/déverrouillage (25) adaptés pour verrouiller ledit au moins un piston (22) dans sa position inactivée lorsque la température dudit moyen de verrouillage/déverrouillage est inférieure à un seuil de température, et pour libérer ledit au moins un piston (22) lorsque la température dudit moyen de verrouillage/déverrouillage est supérieure au dit seuil de température ;
- des moyens élastiques (24) adaptés pour déplacer ledit au moins un piston (22) lorsque ledit piston est libéré, de manière à positionner ledit anneau d'étanchéité (23) dans sa position activée.

2. Dispositif d'étanchéité à l'arrêt passif (20) pour système de joints d'arbre de groupe motopompe primaire selon la revendication précédente **caractérisé en ce que** ledit dispositif est adapté pour être intégré sur un système de joints d'un arbre de groupe motopompe primaire en service.

3. Dispositif d'étanchéité à l'arrêt passif (20) pour système de joints d'arbre de groupe motopompe primaire selon l'une des revendications précédentes **caractérisé en ce que** ledit anneau (23) comporte une paroi latérale chanfreinée adaptée pour coopérer avec une paroi chanfreinée dudit au moins un piston (22).

4. Dispositif d'étanchéité à l'arrêt passif (20) pour système de joints d'arbre de groupe motopompe primaire selon l'une des revendications précédentes **caractérisé en ce que** lesdits moyens de verrouillage/déverrouillage (25) sont adaptés pour se dégrader mécaniquement à partir d'un seuil de température compris entre 80°C et 200°C, avantageusement égal à 150°C.

5. Dispositif d'étanchéité à l'arrêt passif (20) pour système de joints d'arbre de groupe motopompe primaire selon l'une des revendications précédentes **caractérisé en ce que** ledit anneau d'étanchéité (23) est réalisé dans un matériau polymère résistant à des températures supérieures à 300 °C.

6. Dispositif d'étanchéité à l'arrêt passif (20) pour système de joints d'arbre de groupe motopompe primaire selon la revendication précédente **caractérisé en ce que** ledit anneau d'étanchéité (23) est réalisé en PEEK.

7. Dispositif d'étanchéité à l'arrêt passif (20) pour système de joints d'arbre de groupe motopompe primaire selon l'une des revendications 5 à 6 **caractérisé en ce que** ledit anneau d'étanchéité (23) est réalisé en un composite à matrice PEEK chargé fibre de verre ou de carbone.

8. Dispositif d'étanchéité à l'arrêt passif (20) pour système de joints d'arbre de groupe motopompe primaire selon l'une des revendications 1 à 4 **caractérisé en ce que** ledit anneau d'étanchéité (23) est réalisé dans un matériau métallique.

9. Dispositif d'étanchéité à l'arrêt passif (20) pour système de joints d'arbre de groupe motopompe primaire selon l'une des revendications 1 à 4 **caractérisé en ce que** ledit anneau d'étanchéité (23) est un matériau composite formé par un noyau métallique et revêtu par un matériau plus malléable que ledit noyau métallique.

10. Dispositif d'étanchéité à l'arrêt passif (20) pour système de joints d'arbre de groupe motopompe primaire selon la revendication 9 **caractérisé en ce que** ledit matériau plus malléable que ledit noyau métallique est un polymère ou du nickel ou de l'argent.

11. Dispositif d'étanchéité à l'arrêt passif (20) pour système de joints d'arbre de groupe motopompe primaire selon l'une des revendications précédentes **caractérisé en ce que** lesdits moyens élastiques (24) sont des ressorts de compression hélicoïdaux ou des ressorts à vagues ou des rondelles élastiques.

12. Dispositif d'étanchéité à l'arrêt passif (20) pour système de joints d'arbre de groupe motopompe primaire selon l'une des revendications précédentes **caractérisé en ce qu'**il comporte une pluralité de pistons (23) et une pluralité de moyens de verrouillage/déverrouillage (25) répartis sur le pourtour dudit anneau (23), lesdits pistons (23) et lesdits moyens de verrouillage/déverrouillage (25) étant écartés angulairement les uns des autres d'un angle constant.

13. Dispositif d'étanchéité à l'arrêt passif (20) pour système de joints d'arbre de groupe motopompe primaire selon l'une des revendications précédentes **caractérisé en ce qu'**il comporte trois pistons (23) et trois moyens de verrouillage/déverrouillage (25).

14. Dispositif d'étanchéité à l'arrêt passif (20) pour système de joints d'arbre de groupe motopompe primaire selon l'une des revendications précédentes **caractérisé en ce qu'**il comporte une bague fendue (26) intégrée dans ledit anneau d'étanchéité (23) et adaptée pour assurer l'étanchéité dudit dispositif (20) en cas de dégradation dudit anneau (23).

15. Groupe motopompe primaire **caractérisé en ce qu'**il comporte :
- un système de joints adapté pour réaliser une fuite contrôlée s'établissant le long d'un chemin de fuite agencé le long de l'arbre pompe du groupe motopompe primaire ;
- un dispositif d'étanchéité à l'arrêt passif selon l'une des revendications précédentes adapté pour obturer au moins partiellement ledit chemin de fuite dudit système de joints lorsque ledit système de joint est défaillant et lorsque ledit anneau d'étanchéité est activé, de manière à réaliser une fuite contrôlée.

## Patentansprüche

1. Abdichtvorrichtung mit passiver Abschaltung (20) für ein Wellendichtungssystem mit einer primären Motorpumpengruppe, umfassend:
- einen geschlitzten Dichtungsring (23), der eine inaktivierte Position aufweist, in der ein Leckdurchsatz zugelassen ist, und eine aktivierte Position, in der der genannte Ring den genannten Leckdurchsatz stoppt:
- wenigstens einen Druckkolben (22), der geeignet ist, um den genannten geschlitzten Dichtungsring (23) in seiner aktivierten Position zu positionieren;
**dadurch gekennzeichnet, dass** sie umfasst:
- Verr- / Entriegelungsmittel (25), die geeignet sind, um den genannten wenigstens einen Druckkolben (22) in seiner inaktivierten Position zu verriegeln, wenn die Temperatur des genannten Verr- / Entriegelungsmittels unter einer Temperaturschwelle liegt, und um den genannten wenigstens einen Druckkolben (22) freizusetzen, wenn die Temperatur des genannten Verr- / Entriegelungsmittels höher ist als die genannte Temperaturschwelle;
- elastische Mittel (24), die geeignet sind, um den genannten wenigstens einen Druckkolben (22) zu verschieben, wenn der genannte Druckkolben derart freigesetzt ist, dass der genannte Dichtungsring (23) in seiner aktivierten Position positioniert ist.

2. Abdichtvorrichtung mit passiver Abschaltung (20) für ein Wellendichtungssystem mit einer primären Motorpumpengruppe gemäß dem voranstehenden Anspruch, **dadurch gekennzeichnet, dass** die genannte Vorrichtung geeignet ist, um auf einem Dichtungssystem einer primären Motorpumpengruppe im Betrieb integriert zu werden.

3. Abdichtvorrichtung mit passiver Abschaltung (20) für ein Wellendichtungssystem mit einer primären Motorpumpengruppe gemäß einem der voranstehenden Ansprüche, **dadurch gekennzeichnet, dass** der genannte Ring (23) eine abgefaste laterale Wand umfasst, die geeignet ist, um mit einer abgefasten Wand des genannten wenigstens einen Druckkolbens (22) zusammenzuwirken.

4. Abdichtvorrichtung mit passiver Abschaltung (20) für ein Wellendichtungssystem mit einer primären Motorpumpengruppe gemäß einem der voranstehenden Ansprüche, **dadurch gekennzeichnet, dass** die genannten Verr- / Entriegelungsmittel (25) geeignet sind, um sich ab einer zwischen 80° C und 200° C inbegriffenen Temperaturschwelle, die vorteilhaft gleich 150° C ist, mechanisch abzubauen.

5. Abdichtvorrichtung mit passiver Abschaltung (20) für ein Wellendichtungssystem mit einer primären Motorpumpengruppe gemäß einem der voranstehenden Ansprüche, **dadurch gekennzeichnet, dass** der genannte Abdichtring (23) aus einem Polymermaterial realisiert ist, das Temperaturen von mehr als 300° C standhält.

6. Abdichtvorrichtung mit passiver Abschaltung (20) für ein Wellendichtungssystem mit einer primären Motorpumpengruppe gemäß dem voranstehenden Anspruch, **dadurch gekennzeichnet, dass** der genannte Dichtungsring (23) aus PEEK realisiert ist.

7. Abdichtvorrichtung mit passiver Abschaltung (20) für ein Wellendichtungssystem mit einer primären Motorpumpengruppe gemäß Anspruch 5 bis 6, **dadurch gekennzeichnet, dass** der genannte Dichtungsring (23) aus einem mit Glasfasern oder Kohlenstofffasern angereicherten Verbundmaterial mit PEEK-Matrix realisiert ist.

8. Abdichtvorrichtung mit passiver Abschaltung (20) für ein Wellendichtungssystem mit einer primären Motorpumpengruppe gemäß Anspruch 1 bis 4, **dadurch gekennzeichnet, dass** der genannte Dichtungsring (23) aus einem metallischen Material realisiert ist.

9. Abdichtvorrichtung mit passiver Abschaltung (20) für ein Wellendichtungssystem mit einer primären Motorpumpengruppe gemäß Anspruch 1 bis 4, **dadurch gekennzeichnet, dass** der genannte Dichtungsring (23) ein Verbundmaterial ist, das aus einem metallischen Kern gebildet und durch ein formbareres Material als der genannte metallische Kern beschichtet ist.

10. Abdichtvorrichtung mit passiver Abschaltung (20) für ein Wellendichtungssystem mit einer primären Motorpumpengruppe gemäß Anspruch 9, **dadurch gekennzeichnet, dass** das genannte Material, das formbarer ist als der genannte metallische Ring, ein Polymer oder Nickel oder Silber ist.

11. Abdichtvorrichtung mit passiver Abschaltung (20) für ein Wellendichtungssystem mit einer primären Motorpumpengruppe gemäß einem der voranstehenden Ansprüche, **dadurch gekennzeichnet, dass** die genannten elastischen Mittel (24) spiralförmige Druckfedern oder Wellenfedern oder elastische Scheiben sind.

12. Abdichtvorrichtung mit passiver Abschaltung (20) für ein Wellendichtungssystem mit einer primären Motorpumpengruppe gemäß einem der voranstehenden Ansprüche, **dadurch gekennzeichnet, dass** sie eine Vielzahl von Druckkolben (22) und eine Vielzahl von Verr- / Entriegelungsmitteln (25) umfasst, die auf dem Umfang des genannten Rings (23) verteilt sind, wobei die genannten Druckkolben (22) und die genannten Verr- / Entriegelungsmittel (25) winkelförmig voneinander in einem konstanten Winkel beabstandet sind.

13. Abdichtvorrichtung mit passiver Abschaltung (20) für ein Wellendichtungssystem mit einer primären Motorpumpengruppe gemäß einem der voranstehenden Ansprüche, **dadurch gekennzeichnet, dass** sie drei Druckkolben (22) und drei Verr- / Entriegelungsmittel (25) umfasst.

14. Abdichtvorrichtung mit passiver Abschaltung (20) für ein Wellendichtungssystem mit einer primären Motorpumpengruppe gemäß einem der voranstehenden Ansprüche, **dadurch gekennzeichnet, dass** sie einen geschlitzten Ring (26) umfasst, der in den genannten Dichtungsring (23) integriert ist und geeignet ist, um die Abdichtung der genannten Vorrichtung (20) bei einer Beschädigung des genannten Rings (23) zu gewährleisten.

15. Primäre Motorpumpengruppe, **dadurch gekennzeichnet, dass** sie umfasst:
- ein Dichtungssystem, das geeignet ist, um ein kontrolliertes Leck zu realisieren, das sich entlang einem Leckweg etabliert, der entlang der Pumpenwelle der primären Motorpumpengruppe angeordnet ist;
- eine Abdichtvorrichtung mit passiver Abschaltung gemäß einem der voranstehenden Ansprüche, die geeignet ist, um wenigstens teilweise den genannten Leckweg des genannten Dichtungssystems zu verschließen, wenn das genannte Dichtungssystem ausgefallen ist und wenn der genannte Dichtungsring derart aktiviert ist, dass ein kontrolliertes Leck realisiert wird.

## Claims

1. A passive shutdown sealing device (20) for a seal system of a primary motor pump unit shaft, including:
- a split sealing ring (23) having an inactivated position in which a leakage flow is allowed and an activated position in which said ring stops said leakage flow;
- at least one piston (22) adapted to position said split sealing ring (23) in its activated position;
**characterised in that** it includes:
- locking/unlocking means (25) adapted to lock said at least one piston (22) in its inactivated position when the temperature of said locking/unlocking means is lower than a temperature threshold, and to release said at least one piston (22) when the temperature of said locking/unlocking means is higher than said temperature threshold;
- elastic means (24) adapted to move said at least one piston (22) when said piston is released, so as to position said sealing ring (23) in its activated position.

2. The passive shutdown sealing device (20) for a seal system of a primary motor pump shaft according to the preceding claim, **characterised in that** said device is adapted to be fitted on a seal system of a primary motor pump shaft in operation.

3. The passive shutdown sealing device (20) for a seal system of a primary motor pump shaft according to one of the preceding claims, **characterised in that** said ring (23) includes a chamfered sidewall adapted to cooperate with a chamfered wall of said at least one piston (22).

4. The passive shutdown sealing device (20) for a seal system of a primary motor pump shaft according to one of the preceding claims, **characterised in that** said locking/unlocking means (25) are adapted to mechanically deteriorate from a temperature threshold between 80°C and 200°C, advantageously equal to 150°C.

5. The passive shutdown sealing device (20) for a seal system of a primary motor pump shaft according to one of the preceding claims, **characterised in that** said sealing ring (23) is made of a polymer material withstanding temperatures higher than 300°C.

6. The passive shutdown sealing device (20) for a seal system of a primary motor pump shaft according to the preceding claim, **characterised in that** said sealing ring (23) is made of PEEK.

7. The passive shutdown sealing device (20) for a seal system of a primary motor pump shaft according to one of claims 5 to 6, **characterised in that** said sealing ring (23) is made of a glass fibre or carbonloaded PEEK matrix composite.

8. The passive shutdown sealing device (20) for a seal system of a primary motor pump shaft according to one of claims 1 to 4, **characterised in that** said sealing ring (23) is made of a metal material.

9. The passive shutdown sealing device (20) for a seal system of a primary motor pump shaft according to one of claims 1 to 4, **characterised in that** said sealing ring (23) is a composite material formed by a metal core and coated by a material more malleable than said metal core.

10. The passive shutdown sealing device (20) for a seal system of a primary motor pump shaft according to claim 9, **characterised in that** said material more malleable than said metal core is a polymer or nickel or silver.

11. The passive shutdown sealing device (20) for a seal system of a primary motor pump shaft according to one of the preceding claims, **characterised in that** said elastic means (24) are helicoid compression springs or wave springs or elastic washers.

12. The passive shutdown sealing device (20) for a seal system of a primary motor pump shaft according to one of the preceding claims, **characterised in that** it includes a plurality of pistons (22) and a plurality of locking/unlocking means (25) distributed on the rim of said ring (23), said pistons (22) and said locking/unlocking means (25) being angularly apart from one another by a constant angle.

13. The passive shutdown sealing device (20) for a seal system of a primary motor pump shaft according to one of the preceding claims, **characterised in that** it includes three pistons (22) and three locking/unlocking means (25).

14. The passive shutdown sealing device (20) for a seal system of a primary motor pump shaft according to one of the preceding claims, **characterised in that** it includes a split bushing (26) fitted into said sealing ring (23) and adapted to provide sealing of said device (20) in case of deterioration of said ring (23).

15. A primary motor pump unit **characterised in that** it includes:
- a seal system adapted to perform a controlled leakage building along a leakage path arranged along the pump shaft of the primary motor pump unit;
- a passive shutdown sealing device according to one of the preceding claims adapted to at least partially close said leakage path of said seal system when said seal system is faulty and when said sealing ring is activated, so as to perform a controlled leakage.
